# EUROPÄISCHE PATENTANMELDUNG

(11) **EP 1 809 078 A2**
(43) Veröffentlichungstag der Anmeldung: **18.07.2007**
(21) Anmeldenummer: 07100341.2
(22) Anmeldetag: 10.01.2007
(51) Int. Cl.: H05B 39/04

(54) **DIMMERSTEUERUNG**

(30) Priorität: 12.01.2006 DE 202006000449 U
(71) Anmelder: Patent-Treuhand-Gesellschaft für elektrische Glühlampen mbH, 81543 München (DE)
(72) Erfinder: KASS, Thomas, 85051, Ingolstadt (DE); LECHELER, Reinhard, 86633, Neuburg/Donau (DE)
(74) Vertreter: Raiser, Franz

(57) **Zusammenfassung**

Die Erfindung betrifft eine Dimmersteuerung zum Ansteuern von zumindest zwei Dimmern für Glühlampen mittels individueller Leistungsstufensignale (S1, S2). Dabei ist die Dimmersteuerung dazu ausgelegt, einen ersten der Dimmer in einem ersten Leistungseinstellungsbereich mit größeren Leistungsstufensignalen (S1, S2) anzusteuern als einen zweiten der Dimmer. Weiter werden der erste und der zweite der Dimmer in einem zweiten Leistungseinstellungsbereich mit Leistungsstufensignalen (S1, S2) größer als drei Viertel der maximalen Leistungsstufensignale (S1, S2) angesteuert. Der erste Leistungseinstellungsbereich liegt dabei bei geringeren Gesamtleistungseinstellungen (S) als der zweite Leistungseinstellungsbereich.

## Beschreibung

### Technisches Gebiet

Die vorliegende Erfindung bezieht sich auf eine Vorrichtung zum Ansteuern zumindest zweier Dimmer für Glühlampen mittels individueller Leistungsstufensignale.

### Stand der Technik

Dimmer zur Leistungsregelung von Lichtquellen sind an sich bekannt. Sie sind zwischen eine Leistungsversorgung und eine Lichtquelle geschaltet, so dass sie die der Lichtquelle zur Verfügung stehende Leistung beeinflussen können. Es gibt verschiedene Dimmerarten, die für verschiedene Einsatzgebiete jeweils angepasst sind.

Weit verbreitet sind beispielsweise Phasenanschnitt- und Phasenabschnittdimmer, welche bestimmte Teile einer jeden Halbwelle einer Wechselstromversorgung der Lichtquelle vorenthalten.

### Darstellung der Erfindung

Der vorliegenden Erfindung liegt die Aufgabe zu Grunde, eine technisch vorteilhafte Vorrichtung zum Ansteuern von zumindest zwei Dimmern für Glühlampen anzugeben.

Die Aufgabe wird gelöst durch eine Dimmersteuerung zum Ansteuern von zumindest zwei Dimmern für Glühlampen mittels individueller Leistungsstufensignale, welche Dimmersteuerung dazu ausgelegt ist, einen ersten der Dimmer in einem ersten Leistungseinstellungsbereich mit größeren Leistungsstufensignalen anzusteuern als einen zweiten der Dimmer und den ersten und den zweiten der Dimmer in einem zweiten Leistungseinstellungsbereich mit Leistungsstufensignalen größer als drei Viertel der maximalen Leistungsstufensignale anzusteuern, wobei der erste Leistungseinstellungsbereich bei geringeren Gesamtleistungen entsprechenden Gesamtleistungseinstellungen liegt als der zweite Leistungseinstellungsbereich.

Bevorzugte Ausgestaltungen der Erfindung sind in den abhängigen Ansprüchen angegeben und werden im Folgenden näher erläutert.

Die Erfinder sind von an sich bekannten Nachteilen von Glühlampen ausgegangen. Glühlampen arbeiten bei einem geringen Leistungsverhältnis aus Leistung und Nennleistung ineffizienter als bei einem höheren Leistungsverhältnis. Weiter ist die Farbtemperatur des Glühlampenlichtes bei einem vergleichsweise geringen Leistungsverhältnis geringer als bei einem höheren Leistungsverhältnis. Oft ist jedoch eine möglichst hohe Farbtemperatur erwünscht. Da Dimmer lediglich das Verhältnis aus Leistung und Nennleistung der an sie angeschlossenen Glühlampen verändern, hängen Effizienz und Farbtemperatur von der Dimmereinstellung ab.

Die Erfindung beruht auf der Erkenntnis, dass bei der Verwendung von zumindest zwei Dimmern mit jeweils zumindest einer angeschlossenen Glühlampe die Gesamtleistung in Abhängigkeit von der Gesamtleistungseinstellung, also der gewünschten Gesamthelligkeit, unterschiedlich auf die Dimmer verteilt werden kann. Durch eine gezielte Verteilung der Gesamtleistung auf die einzelnen Dimmer lässt sich so gewährleisten, dass eine oder ein bestimmter Teil der an die Dimmer angeschlossenen Glühlampen besonders stark und damit besonders effizient und mit hoher Farbtemperatur zu der Gesamthelligkeit beiträgt, während die andere oder ein anderer Teil der Glühlampen keine oder vergleichsweise wenig Leistung umsetzt und damit auch nur vergleichsweise wenig zu der Gesamthelligkeit beiträgt.

Die gewünschte Gesamthelligkeit wird an der erfindungsgemäßen Dimmersteuerung eingestellt; diese Einstellung heißt hier Gesamtleistungseinstellung. Die Dimmersteuerung führt den angeschlossenen Dimmern entsprechende individuelle, d. h. für jeden Dimmer ggf. unterschiedliche, Leistungsstufensignale zu. Ist das Leistungsstufensignal klein, so dimmt der Dimmer sehr stark und eine angeschlossene Glühlampe leuchtet nur schwach, ist das Leistungsstufensignal groß, so leuchtet eine an den Dimmer angeschlossene Glühlampe stark. Kleine bzw. große Leistungsstufensignale müssen nicht vom Betrag einer entsprechenden Messgröße her klein oder groß sein; es handelt sich hier vielmehr um eine vereinfachte Schreibweise, die ausdrücken soll, dass das Signal einer kleinen bzw. großen Leistungsstufe entspricht. Dies gilt sinngemäß auch für andere Größen, wie die Gesamtleistungseinstellung, in der gesamten Anmeldung.

Das Wort "Leistungsstufensignal" soll hier nicht bedeuten, dass die Dimmung in Abhängigkeit von der Gesamtleistungseinstellung diskontinuierlich sein muss. Üblicherweise wird die Dimmung in Abhängigkeit von der Gesamtleistungseinstellung einen kontinuierlichen Verlauf aufweisen, bei dem die Gesamtleistung mit zunehmender Gesamtleistungseinstellung ohne Sprünge zunimmt.

Für den ersten der angeschlossenen Dimmer werden erfindungsgemäß zwei Leistungseinstellungsbereiche unterschieden. Der erste Leistungseinstellungsbereich liegt dabei bei geringeren Gesamtleistungseinstellungen als der zweite Leistungseinstellungsbereich. In seinem ersten Leistungseinstellungsbereich wird dabei der erste Dimmer mit größeren Leistungsstufensignalen zu jeder entsprechenden Gesamtleistungseinstellung angesteuert als ein zweiter der angeschlossenen Dimmer. Dadurch ist es möglich, eine erste an den ersten Dimmer angeschlossene Glühlampe mit vergleichsweise hohen Leistungen zu betreiben, während eine zweite an den zweiten Dimmer angeschlossene Glühlampe mit vergleichsweise geringen Leistungen betrieben wird.

Z. B. kann an den ersten Dimmer eine Glühlampe mit einer geringen Nennleistung, etwa 40 W, und an den zweiten Dimmer eine Glühlampe mit einer höheren Nennleistung, hier 80 W, angeschlossen sein. Ausgehend von einer geringen Gesamtleistungseinstellung werden in diesem Beispiel der erste und der zweite Dimmer zunächst so angesteuert, dass vor allem die erste Glühlampe zu der Gesamthelligkeit beiträgt. Auf diese Weise erreicht die erste Lampe vergleichsweise schnell ein hohes Verhältnis aus Leistung und Nennleistung und arbeitet so besonders effizient und bei hoher Farbtemperatur. Die zweite Glühlampe arbeitet zunächst eventuell nicht und bei höheren Gesamtleistungseinstellungen mit einem relativ geringen Verhältnis aus Leistung und Nennleistung und trägt somit kaum zu der Gesamthelligkeit und dem Gesamtleistungsumsatz bei. Insgesamt wird so also vergleichsweise effizient ein Licht mit einer recht hohen Farbtemperatur hergestellt.

Es ist natürlich wünschenswert, wenn die Dimmersteuerung so ausgelegt ist, dass die Gesamthelligkeit mit zunehmender Gesamtleistungseinstellung streng monoton zunimmt. Da der Beitrag einzelner Glühlampen zur Gesamthelligkeit, etwa bei Versuchen, leicht bestimmt werden kann, ist dieses Ziel ohne weiteres durch eine entsprechende Auswahl der Dimmer, der Glühlampen und der Auslegung der Dimmersteuerung zu erreichen.

Bei großen Gesamtleistungseinstellungen müssen natürlich sämtliche an die Dimmersteuerung angeschlossenen Dimmer mit großen Leistungsstufensignalen angesteuert werden. Der zweite Leistungsstufenbereich des ersten und des zweiten Dimmers liegt bei größeren Gesamtleistungseinstellungen. Hier werden der erste und der zweite Dimmer mit Leistungsstufensignalen angesprochen, welche größer als drei Viertel des jeweils maximalen Leistungsstufensignals sind. Es ist bevorzugt, wenn diese Leistungsstufensignale bei maximaler Gesamtleistungseinstellung größer als 80, 90, 95, 99 % des jeweils maximalen Leistungsstufensignals sind bzw. diesem entsprechen, wobei die Prozentangaben in der angegebenen Reihenfolge zunehmend bevorzugt sind.

Bei einer bevorzugten Ausführungsform der Erfindung ist die Dimmersteuerung dazu ausgelegt, den ersten Dimmer in einem dritten Leistungseinstellungsbereich mit größer werdenden Gesamtleistungseinstellungen mit einem monoton fallenden Leistungsstufensignal anzusteuern. "Monoton fallend" ist im Rahmen dieser Beschreibung in einem technischen Sinne und nicht rein mathematisch zu verstehen. Ein Leistungsstufensignal ist hier also "monoton fallend", wenn es nicht in einem technisch relevanten, also vom Benutzer anhand der Helligkeit wahrnehmbaren, Maße ansteigt. Dieser dritte Leistungseinstellungsbereich liegt bei größeren Gesamtleistungseinstellungen als der erste Leistungseinstellungsbereich und bei kleineren Gesamtleistungseinstellungen als der zweite Leistungseinstellungsbereich.

Da das Leistungsstufensignal des ersten Dimmers im ersten Leistungseinstellungsbereich zunächst zunimmt, folgt aus der eben beschriebenen Anordnung des ersten, zweiten und dritten Leistungseinstellungsbereichs, dass das erste Leistungsstufensignal ein Maximum durchlaufen muss. In diesem Maximum wird eine an den ersten Dimmer angeschlossene Glühlampe besonders effizient betrieben und gibt Licht mit einer besonders hohen Farbtemperatur ab. Bei dieser bevorzugten Ausführungsform der Erfindung wird eine weitere Zunahme der Gesamthelligkeit nicht dadurch erzielt, dass die Leistungsstufen für alle an die Dimmersteuerung angeschlossenen Dimmer mit zunehmender Gesamtleistungseinstellung gemeinsam zunimmt. Vielmehr geht die Leistungsstufe des ersten Dimmers zunächst einmal wieder zurück und steigt dafür die Leistungsstufe des zweiten Dimmers besonders stark an.

Dies kann die Vorteile der Erfindung noch weiter verstärken, wie nun im Rahmen des obigen Beispiels nun weiter ausgeführt wird: Ausgehend von geringen Gesamtleistungseinstellungen und damit geringen Gesamthelligkeiten wird zunächst mit einer sich vergrößernden Gesamtleistungseinstellung die Leistungsstufe des ersten Dimmers erhöht; parallel dazu wird auch die Leistungsstufe des zweiten Dimmers angehoben, aber nicht so stark. So erreicht die erste an den ersten Dimmer angeschlossene Glühlampe bei einer wesentlich geringeren Gesamthelligkeit bereits ein größeres Verhältnis aus Leistung und Nennleistung als die zweite an den zweiten Dimmer angeschlossene Glühlampe. Bei einer bestimmten Gesamtleistungseinstellung erreicht die Leistung der ersten Glühlampe die Nennleistung derselben. Die Gesamthelligkeit wird ab diesem Punkt durch eine Erhöhung der Leistungsstufe des zweiten Dimmers erzielt. Da die zweite Glühlampe jedoch eine größere Nennleistung aufweist als die erste Glühlampe ist ihr Verhältnis aus Leistung und Nennleistung bei dieser Gesamtleistungseinstellung noch recht gering, an ihr wird aber bereits ein erheblicher Teil der Leistung umgesetzt. Daher ist es vorteilhaft, dass das Leistungsverhältnis der zweiten Glühlampe möglichst stark mit steigender Gesamtleistungseinstellung ansteigt, damit die zweite Glühlampe möglichst effizient und mit möglichst hoher Farbtemperatur betrieben wird. Andererseits ist es wünschenswert, dass die Gesamthelligkeit mit zunehmender Gesamtleistungseinstellung möglichst glatt und gleichmäßig anwächst. Um trotzdem die Leistung der zweiten Glühlampe stark erhöhen zu können, kann man in dem dritten Leistungsstufenbereich des ersten Dimmers dessen Leistungsstufe wieder etwas absinken lassen. Sobald die zweite Glühlampe in einem erheblichen Maße zu der Gesamthelligkeit beiträgt, kann die Leistungsstufe des ersten Dimmers wieder zusammen mit der Gesamtleistungseinstellung erhöht werden.

Bei einer bevorzugten Ausführungsform der Erfindung ist die Dimmersteuerung zum Ansteuern von mehr als zwei Dimmern ausgelegt. Die Qualität der Leistungsstufensignale für den ersten und für den zweiten der an die Dimmersteuerung angeschlossenen Dimmer entspricht dabei der oben beschriebenen. Alle weiteren Dimmer empfangen von der Dimmersteuerung individuelle Leistungsstufensignale, welche sich qualitativ so verhalten wie das des ersten Dimmers. Obwohl der erste, der dritte und ggf. sämtliche weiteren Dimmer qualitativ vergleichbare Leistungsstufensignale empfangen, ist es möglich, dass diese Leistungsstufensignale sich quantitativ erheblich unterscheiden. Jeder Dimmer hat seine auf sich bezogenen Leistungsstufenbereiche, die bezogen auf die Gesamtleistungseinstellung durchaus bei unterschiedlichen Gesamtleistungen beginnen und enden können. Beispielsweise kann der erste Leistungsstufenbereich des ersten Dimmers bei 0 % der Gesamtleistungseinstellung beginnen und bei 50 % derselben enden, während der erste Leistungsstufenbereich des dritten Dimmers bei 20 % der Gesamtleistungseinstellung beginnt und bei 70 % derselben endet. Durch die individuelle Anpassung der Leistungsstufensignale an die einzelnen Dimmer kann den Eigenschaften der einzelnen Dimmer und der an sie angeschlossenen Lampen Rechnung getragen werden. Wegen der hohen Flexibilität der Dimmersteuerung bzgl. ihrer Leistungsstufensignale ist es deshalb gut möglich, die Effizienz des Gesamtsystems aus Dimmersteuerung, angeschlossenen Dimmern und an diese angeschlossenen Glühlampen zu optimieren bzw. die Farbtemperatur wie gewünscht einzustellen.

In der oben beschriebenen Ausführungsform der Erfindung ist es bevorzugt, wenn nicht nur der erste, sondern auch der dritte und alle ggf. weiteren Dimmer in einem jeweils dritten Leistungseinstellungsbereich mit größer werdenden Gesamtleistungseinstellungen mit monoton fallenden Leistungsstufensignalen angesteuert werden. Der Vorteil entspricht dem oben beschriebenen Vorteil; der Unterschied ist in der Anzahl der angeschlossenen Dimmer begründet.

Weist das Leistungsstufensignal für einen ersten, dritten und/oder ggf. weitere Dimmer einen dritten Leistungseinstellungsbereich mit mit der Gesamtleistungseinstellung monoton fallenden Leistungsstufensignalen auf, wobei dieser dritte Leistungseinstellungsbereich bei größeren Gesamtleistungseinstellungen als der erste Leistungseinstellungsbereich und bei kleineren Gesamtleistungseinstellungen als der zweite Leistungseinstellungsbereich liegt, so weist das Leistungsstufensignal, genau wie oben bereits festgestellt, notwendigerweise ein Maximum auf.

Die Positionen der Maxima liegen vorzugsweise bei unterschiedlichen Gesamtleistungseinstellungen. So ist es möglich, dass für möglichst viele Gesamtleistungseinstellungen zumindest eine der an einen der Dimmer angeschlossenen Glühlampen ein großes Verhältnis aus Leistung und Nennleistung aufweist.

Weiter ist es bevorzugt, dass das Leistungsstufensignal für den zweiten Dimmer monoton mit zunehmender Gesamtleistungseinstellung zunimmt. Beispielsweise kann die an den zweiten Dimmer angeschlossene Glühlampe die höchste Nennleistung aller an die Dimmer angeschlossenen Glühlampen aufweisen. Diese Glühlampe sollte erst nennenswert zur Gesamthelligkeit beitragen, wenn es möglich ist, die Gesamtleistung so zu verteilen, dass an dieser Glühlampe eine Leistung abfällt, welche eine zufrieden stellende Effizienz und Farbtemperatur ermöglicht. Bei geringeren Gesamtleistungseinstellungen liegende, nicht monotone Leistungsstufensignalverläufe für den zweiten Dimmer stellen daher suboptimale Ausführungsformen der Erfindung dar.

Es können beispielsweise sämtliche an die Dimmer angeschlossenen Glühlampen eine unterschiedliche Nennleistung aufweisen. In diesem Fall ist es sinnvoll, dass an den zweiten Dimmer die Glühlampe mit der höchsten Nennleistung angeschlossen ist. Der zweite Dimmer wird so angesteuert, dass das Verhältnis aus Leistung und Nennleistung der an diesen angeschlossenen Glühlampe mit zunehmender Gesamtleistungseinstellung monoton zunimmt. Sämtliche andere Dimmer werden so angesteuert, dass die Positionen der Leistungsstufenmaxima bezogen auf die Gesamtleistungseinstellung in der Reihenfolge der Größe der Nennleistung der Glühlampen aufeinander abfolgen. D. h. dass der Dimmer, an dem die Glühlampe mit der geringsten Nennleistung angeschlossen ist, so angesteuert wird, dass das Leistungsstufensignal bei vergleichsweise geringen Gesamtleistungseinstellungen bereits ein Maximum durchläuft. Der Dimmer, an den die Glühlampe mit der zweitkleinsten Nennleistung angeschlossen ist, wird so angesteuert, dass das Leistungsstufensignal ein Maximum bei etwas höheren Gesamtleistungseinstellungen durchläuft. Entsprechendes gilt für den dritten und ggf. alle weiteren Dimmer.

Ein bevorzugtes elektronisches Vorschaltgerät weist zumindest zwei Dimmer und eine erfindungsgemäße Dimmersteuerung zum Ansteuern der Dimmer auf. Jeder Dimmer ist zur Ansteuerung zumindest einer Glühlampe ausgelegt. Es kann sich sowohl um ein integriertes elektronisches Vorschaltgerät handeln, bei dem die Dimmer und die Dimmersteuerung in ein gemeinsames Gehäuse eingebracht sind, als auch um ein elektronisches Vorschaltgerät, bei dem sich die Dimmer und die Dimmersteuerung kein gemeinsames Gehäuse teilen.

Vorzugsweise sind mehrere Dimmer für Glühlampen und eine erfindungsgemäße Dimmersteuerung in einer Leuchte integriert. An die Dimmer können jeweils Glühlampen angeschlossen werden und die Dimmersteuerung steuert die Dimmer wie oben beschrieben an. Die Integration von Dimmern und Dimmersteuerung in einer Leuchte ist insbesondere für den Endabnehmer leichter zu handhaben als einzelne Dimmer und eine davon räumlich isolierte Dimmersteuerung, bei der die Dimmer bspw. über Kabel mit der Dimmersteuerung verbunden sind.

Die vorstehende und die nachfolgende Beschreibung der einzelnen Merkmale beziehen sich auf die Dimmersteuerung, auf das elektronische Vorschaltgerät, welches die erfindungsgemäße Dimmersteuerung aufweist, und auf die eben beschriebene Leuchte, aber auch auf ein der Erfindung entsprechendes Verfahren und auf ein Steuerprogrammprodukt, welches die Dimmersteuerung dazu veranlasst, sich erfindungsgemäß zu verhalten, ohne dass die beiden letzten Aspekte in der Beschreibung noch explizit erwähnt werden.

Die Erfindung bezieht sich grundsätzlich also auch auf ein Verfahren zum Ansteuern von zumindest zwei Dimmern für Glühlampen mittels individueller Leistungsstufensignale mit folgenden Schritten: Ansteuern eines ersten der Dimmer in einem ersten Leistungseinstellungsbereich mit größeren Leistungsstufensignalen als einen zweiten der Dimmer und Ansteuern des ersten und des zweiten der Dimmer in einem zweiten Leistungseinstellungsbereich mit Leistungsstufensignalen größer als drei Viertel der maximalen Leistungsstufensignale, wobei der erste Leistungseinstellungsbereich bei geringeren Gesamtleistungen entsprechenden Gesamtleistungseinstellungen liegt als der zweite Leistungseinstellungsbereich.

### Kurze Beschreibung der Zeichnungen

Im Folgenden soll die Erfindung anhand von Ausführungsbeispielen näher erläutert werden. Die dabei offenbarten Einzelmerkmale können auch in anderen Kombinationen erfindungswesentlich sein.
- Figur 1: zeigt ein schematisches Blockschaltbild eines Systems aus Dimmersteuerung und zwei Dimmern mit jeweils einer angeschlossenen Glühlampe.
- Figur 2a: zeigt zwei Leistungsstufensignale als Funktion der Gesamtleistungseinstellung.
- Figur 2b: zeigt einen alternativen Verlauf von zwei Leistungsstufensignalen als Funktion der Gesamtleistungseinstellung.
- Figur 2c: zeigt den Verlauf von Lichtströmen als Funktion der Gesamtleistungseinstellung.
- Figur 3: zeigt einen Verlauf von vier Leistungsstufensignalen als Funktion der Gesamtleistungseinstellung.

### Bevorzugte Ausführung der Erfindung

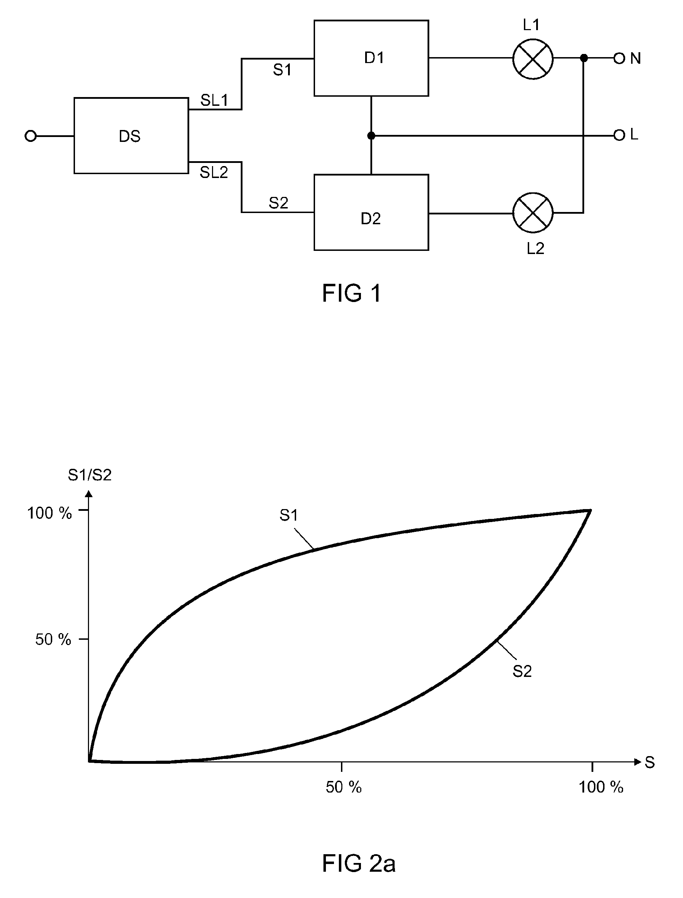

Figur 1 zeigt als Ausführungsbeispiel schematisch ein Blockschaltbild eines Systems aus einer Dimmersteuerung DS, einem ersten Dimmer D1, einem zweiten Dimmer D2 und zwei Glühlampen L1 und L2. An der Dimmersteuerung DS ist ein Drehknopf (nicht gezeigt) angebracht, mit dem sich die Gesamtleistungseinstellung S vorgeben lässt. Kleine Werte der Gesamtleistungseinstellung S entsprechen einer geringen gewünschten Gesamtleistung und große Werte der Gesamtleistungseinstellung S entsprechen einer großen gewünschten Gesamtleistung, wobei 0 % der maximalen Gesamtleistungseinstellung S einer Leistung von Null entsprechen und 100 % der Gesamtleistungseinstellung S der maximal möglichen Gesamtleistung.

Die Dimmersteuerung DS ist über eine Signalleitung SL1 mit dem ersten Dimmer D1 verbunden, über die dem Dimmer D1 von der Dimmersteuerung ein Leistungsstufensignal S1 zugeführt wird. Analog wird dem zweiten Dimmer D2 über eine Signalleitung SL2 ein Leistungsstufensignal S2 zugeführt. Die Dimmer D1, D2 sind zwischen Phase (L) und Null (N) geschaltet. Jeweils zwischen die Dimmer D1, D2 und dem Nullleiter (N) sind Glühlampen L1 bzw. L2 geschaltet. Ähnlich wie der Gesamtleistungseinstellung S werden den Leistungsstufensignalen S1, S2 Werte zwischen 0 und 100 % zugewiesen. 0 % entspricht dabei der minimalen und 100 % entsprechen der maximalen Leistung der an einen der Dimmer D1, D2 angeschlossenen Glühlampen L1, L2.

In diesem Beispiel sind die Glühlampen L1 und L2 gemeinsam in einen Deckenfluter eingebaute Halogenglühlampen, wobei die Glühlampe L1 eine Nennleistung von 150 W und die Glühlampe L2 eine Nennleistung von 300 W aufweist. Für eine Tischleuchte könnte man eine Nennleistung von 35 W für die Glühlampe L1 und eine Nennleistung von 50 W für die Glühlampe L2 wählen.

Figur 2a zeigt schematisch einen Verlauf der Leistungsstufensignale S1 und S2 als Funktion der Gesamtleistungseinstellung S. Mit zunehmenden Gesamtleistungseinstellungen S steigt das Leistungsstufensignal S1 zunächst stark an und wächst dann bis zu seinem maximalen Wert bei maximalen Gesamtleistungseinstellungen monoton weiter. Das Leistungsstufensignal S2 wächst bei geringeren Gesamtleistungseinstellungen zunächst einmal weniger stark, erreicht aber bei 100 % der Gesamtleistungseinstellung auch 100 % seines maximalen Wertes. So wird bei kleineren Gesamtleistungseinstellungen möglichst schnell eine der Glühlampen, hier die Glühlampe L1, mit einem möglichst hohen Leistungs-zu-Nennleistungs-Verhältnis, also besonders effizient und mit hoher Farbtemperatur, betrieben. Erst zu höheren Gesamtleistungseinstellungen hin wird das Leistungs-zu-Nennleistungs-Verhältnis für die Glühlampe L2 erhöht. Erst bei diesen höheren Gesamtleistungseinstellungen wird auch von der zweiten Glühlampe L2 nennenswert Leistung umgesetzt und trägt diese zu der Gesamthelligkeit des Deckenfluters bei.

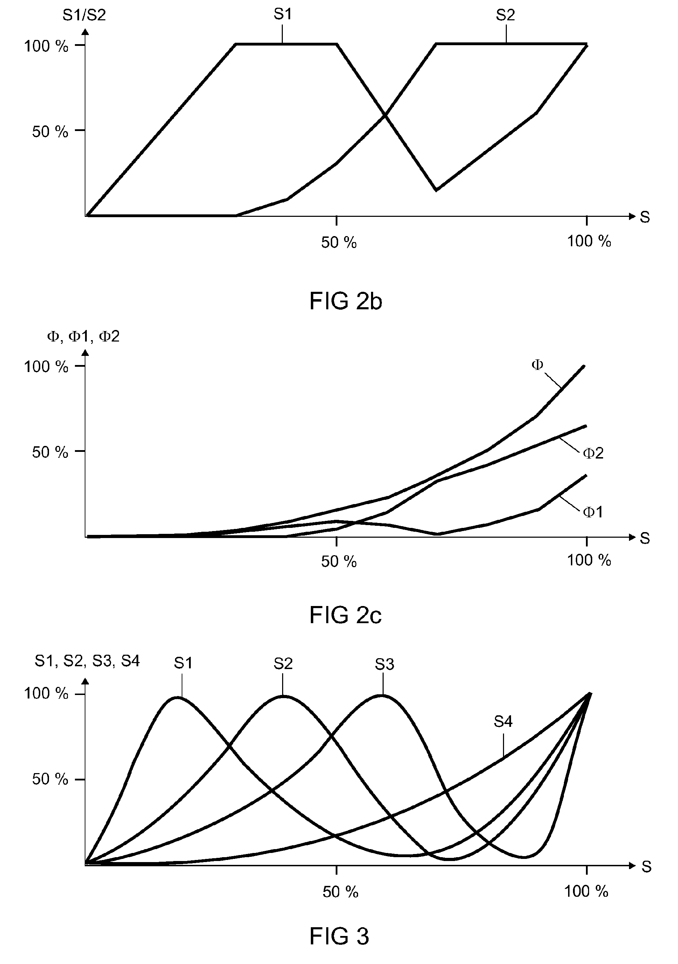

Figur 2b zeigt einen alternativen Verlauf der Leistungsstufensignale S1 und S2 als Funktion der Gesamtleistungseinstellung S. Ausgehend von geringen Gesamtleistungseinstellungen S nimmt das Leistungsstufensignal S1 für den Dimmer D1 zunächst stark zu, durchläuft ein Maximum und fällt danach wieder ab, bevor es bei großen Gesamtleistungseinstellungen wieder bis zu seinem maximal möglichen Wert ansteigt. Das Leistungsstufensignal S2 für den Dimmer D2 hingegen steigt erst mit dem Ende des erstgenannten Anstiegs des Leistungsstufensignals S1 mit größer werdenden Gesamtleistungseinstellungen S monoton bis zu seinem maximal möglichen Wert an. Bei großen Gesamtleistungseinstellungen S in dem Bereich des zweitgenannten Anstiegs des Leistungsstufensignals S1 weist der Verlauf des Leistungsstufensignals S2 hier ein Plateau auf.

Da die an den ersten Dimmer D1 angeschlossene Glühlampe L1 eine kleinere Nennleistung als die an den zweiten Dimmer D2 angeschlossene Glühlampe L2 aufweist, kommt bei Gesamtleistungseinstellungen S unterhalb von 50 % ein Großteil des von dem Deckenfluter erzeugten Lichtes aus einer Glühlampe, welche mit einem sehr hohen Verhältnis aus Leistung und Nennleistung operiert. Erst um 50 % der Gesamtleistungseinstellung S nimmt das Leistungsstufensignal S2 für den Dimmer D2 signifikante Werte an. Unterhalb dieses Bereichs wird vergleichsweise wenig Leistung in der Glühlampe L2 umgesetzt und trägt diese auch nur wenig zu der Gesamthelligkeit bei. In dem Bereich um 50 % der Gesamtleistungseinstellung ist die Zunahme der Gesamthelligkeit hauptsächlich durch die Erhöhung des Leistungsstufensignals S2 gegeben. Um möglichst schnell das Verhältnis aus Leistung und Nennleistung für die zweite Glühlampe L2 erhöhen zu können, wird in diesem Bereich das Leistungsstufensignal S1 wieder erniedrigt. Hat auch das Leistungsstufensignal S2 seinen maximal möglichen Wert erreicht, so kann die Gesamthelligkeit nur durch eine Wiederzunahme des Leistungsstufensignals S1 erreicht werden.

Die Figur 2c zeigt den Gesamtlichtstrom Φ und die beiden Lichtströme Φ1 und Φ2 als Funktion der Gesamtleistungseinstellung S. Dem Verlauf der Lichtströme Φ1 und Φ2 liegt dabei der Verlauf der Leistungsstufensignale S1 und S2 aus Figur 2b zu Grunde. Die Leistungsstufensignale S1 und S2 sind dabei so auf die Glühlampen L1 und L2 abgestimmt, dass der Gesamtlichtstrom Φ als Summe der Lichtströme Φ1 und Φ2 eine glatte und monoton steigende Funktion der Gesamtleistungseinstellung S ist.

Figur 3 liegt eine nicht dargestellte Variation des Blockschaltbildes aus Figur 1 zu Grunde. Man denke sich zusätzlich zu den Dimmern D1 und D2 noch zwei Dimmer D3 und D4, welche über Signalleitungen SL3 und SL4 mit Steuersignalen S3 und S4 von der Dimmersteuerung DS angesteuert werden. An den Dimmer D3 und an den Dimmer D4 ist eine Glühlampe L3 bzw. L4 angeschlossen. Sämtliche Dimmer D1 bis D4 sind zwischen Phase (L) und Null (N) geschaltet. Die Glühlampe L1 weist eine Nennleistung von 40 W, die Glühlampe L2 von 80 W, die Glühlampe L3 von 120 W und die Glühlampe L4 eine Nennleistung von 160 W auf. Figur 3 zeigt nun die Leistungsstufensignale S1, S2, S3 und S4 als Funktion der Gesamtleistungseinstellung S. Das Leistungsstufensignal S4 für die Glühlampe L4 mit der höchsten Nennleistung wächst monoton mit wachsenden Gesamtleistungseinstellungen S bis zu seinem maximal möglichen Wert bei maximaler Gesamtleistungseinstellung S. Die Leistungsstufensignale S1 bis S3 zeigen qualitativ das Verhalten des Leistungsstufensignals S1 aus Figur 2b, wobei allerdings die Positionen der Maxima der Leistungsstufensignale S1 bis S3 bezogen auf die Gesamtleistungseinstellung S verschieden sind. Die Reihenfolge der Maxima entlang der Gesamtleistungseinstellung S entspricht der Reihenfolge der Größe ihrer Nennleistungen. Die einzelnen Leistungsstufensignale S1 bis S4 sind so gewählt, dass deren Summe monoton steigend ist.

## Patentansprüche

1. Dimmersteuerung (DS) zum Ansteuern von zumindest zwei Dimmern (D1, D2) für Glühlampen (L1, L2) mittels individueller Leistungsstufensignale (S1, S2, S3, S4), welche Dimmersteuerung (DS) dazu ausgelegt ist,
- einen ersten der Dimmer (D1, D2) in einem ersten Leistungseinstellungsbereich mit größeren Leistungsstufensignalen (S1, S2, S3, S4) anzusteuern als einen zweiten der Dimmer (D1, D2) und
- den ersten und den zweiten der Dimmer (D1, D2) in einem zweiten Leistungseinstellungsbereich mit Leistungsstufensignalen (S1, S2, S3, S4) größer als drei Viertel der maximalen Leistungsstufensignale (S1, S2, S3, S4) anzusteuern,
- wobei der erste Leistungseinstellungsbereich bei geringeren Gesamtleistungen entsprechenden Gesamtleistungseinstellungen (S) liegt als der zweite Leistungseinstellungsbereich.

2. Dimmersteuerung (DS) nach Anspruch 1, welche dazu ausgelegt ist, den ersten Dimmer (D1, D2) in einem dritten Leistungseinstellungsbereich mit größer werdender Gesamtleistungseinstellung (S) mit monoton fallenden Leistungsstufensignalen (S1*,* S2, S3, S4) anzusteuern,
wobei der dritte Leistungseinstellungsbereich bei größeren Gesamtleistungseinstellungen (S) als der erste Leistungseinstellungsbereich und bei kleineren Gesamtleistungseinstellungen (S) als der zweite Leistungseinstellungsbereich liegt.

3. Dimmersteuerung (DS) nach einem der vorangehenden Ansprüche zum Ansteuern von mehr als zwei Dimmern (D1, D2), bei dem ein dritter und alle gegebenenfalls weiteren Dimmer (D1, D2) in einem jeweils ersten Leistungseinstellungsbereich mit größeren Leistungsstufensignalen (S1, S2, S3, S4) angesteuert werden als der zweite Dimmer (D1, D2) und in einem jeweils zweiten Leistungseinstellungsbereich mit Leistungsstufensignalen (S1, S2, S3, S4) größer als drei Viertel der maximalen Leistungsstufensignale (S1, S2, S3, S4) angesteuert werden.

4. Dimmersteuerung (D1, D2) nach Anspruch 3, welche dazu ausgelegt ist, den dritten und alle gegebenenfalls weiteren Dimmer (D1, D2) in einem jeweils dritten Leistungseinstellungsbereich mit größer werdenden Gesamtleistungseinstellungen (S) mit monoton fallenden Leistungsstufensignalen (S1, S2, S3, S4) anzusteuern,
wobei der/die dritte(n) Leistungseinstellungsbereich(e) bei größeren Gesamtleistungseinstellungen (S1, S2, S3, S4) als der/die erste(n) Leistungseinstellungsbereich(e) und bei kleineren Gesamtleistungseinstellungen (S) als der/die zweite(n) Leistungseinstellungsbereich(e) liegt/liegen.

5. Dimmersteuerung (DS) nach Anspruch 4, bei der der erste, der dritte und alle gegebenenfalls weiteren Dimmer (D1, D2) in dem jeweils ersten Leistungseinstellungsbereich ein auf jeweils diesen bezogenes Maximum des jeweiligen Leistungsstufensignals (S1, S2, S3, S4) aufweisen und die Maxima bei unterschiedlichen Gesamtleistungseinstellungen (S) liegen.

6. Dimmersteuerung (DS) nach einem der vorangehenden Ansprüche, bei der das Leistungsstufensignal (S1, S2, S3, S4) für den zweiten Dimmer (D1, D2) monoton mit zunehmender Gesamtleistungseinstellung (S) zunimmt.

7. Elektronisches Vorschaltgerät mit einer Dimmersteuerung (DS) nach einem der vorangehenden Ansprüche und zumindest zwei Dimmern (D1, D2) zur Ansteuerung je einer angeschlossenen Glühlampe (L1, L2), wobei das elektronische Vorschaltgerät so ausgelegt ist, dass die Dimmer (D1, D2) von der Dimmersteuerung (DS) angesteuert werden.

8. Steuerungsprogrammprodukt zur Verwendung in einer Dimmersteuerung (DS) nach einem der Ansprüche 1 bis 6 zum Ansteuern von zumindest zwei Dimmern (D1, D2) für Glühlampen (L1, L2) mittels individueller Leistungsstufensignale (S1, S2, S3, S4), welches Steuerungsprogrammprodukt die Dimmersteuerung (DS) dazu veranlasst,
- einen ersten der Dimmer (D1, D2) in einem ersten Leistungseinstellungsbereich mit größeren Leistungsstufensignalen (S1, S2, S3, S4) anzusteuern als einen zweiten der Dimmer (D1, D2) und
- den ersten und den zweiten der Dimmer (D1, D2) in einem zweiten Leistungseinstellungsbereich mit Leistungsstufensignalen (S1, S2, S3, S4) größer als drei Viertel der maximalen Leistungsstufensignale (S1, S2, S3, S4) anzusteuern,
- wobei der erste Leistungseinstellungsbereich bei geringeren Gesamtleistungen entsprechenden Gesamtleistungseinstellungen (S) liegt als der zweite Leistungseinstellungsbereich.

9. Leuchte mit einer Dimmersteuerung (DS) nach einem der Ansprüche 1 bis 6 und zumindest zwei Dimmern (D1, D2) zur Ansteuerung je einer angeschlossenen Glühlampe (L1, L2).
